# EUROPEAN PATENT SPECIFICATION

(11) **EP 1 631 087 B1**
(45) Date of publication and mention of the grant of the patent: **06.10.2010**
(21) Application number: 05255027.4
(22) Date of filing: 15.08.2005
(51) Int. Cl.: H04N 7/20, H04H 20/28, H04H 40/90

(54) **Method of obtaining additional network information in digital satellite broadcasting and a satellite broadcast receiver using the same**
Verfahren zur Erlangung von Zusatznetzwerkinformationen in digitalen Satellitenrundfunk und Satellitenempfänger
Procédé pour obtenir des informations sur un réseau additionnel dans un système de diffusion numérique par satellite et récepteur satellite le mettant en oeuvre

(30) Priority: 23.08.2004 KR 2004066277
(43) Date of publication of application: 01.03.2006
(73) Proprietor: Samsung Electronics Co., Ltd., Suwon-si, Gyeonggi-Do (KR)
(72) Inventor: Suh, In-kyo, Songpa-gu Seoul (KR)
(74) Representative: Davies, Robert Ean

(56) References cited:
- EP-A- 1 041 821
- WO-A-03/073749
- US-A1- 2002 015 093

## Description

The present invention relates to satellite broadcasting, and more particularly, but not exclusively, to a method of obtaining additional network information in satellite broadcasting.

Broadcasting, from satellite broadcasting to terrestrial broadcasting, has been rapidly digitized and united with communication. With the development of compression and error correction technology for digital signals and the rapid improvement of semiconductor integration technology, the price of a digital broadcast receiver and the cost for transmitting digital signals have been decreased. As a result, people have been able to enjoy digital broadcasting at home. Digital broadcasting that has been put to practical use may be divided into digital terrestrial broadcasting, digital cable broadcasting, and digital satellite broadcasting. Of those, commercial digital satellite broadcasting began with DIRECTV® in the United States in 1994. Since 1996, new multi-channel satellite broadcast providers have participated in commercial digital satellite broadcasting in earnest.

A Moving Picture Experts Group (MPEG) standard is used for signal coding and multiplexing in common in different types of digital satellite broadcasting. However, parts such as program identification and pay type that are close to the details of service and transmission including error correction have been performed according to individual specifications. Accordingly, people cannot view all satellite broadcasts with a single satellite broadcast receiver.

To receive a satellite broadcast, a satellite broadcast receiver must have information on a satellite transmitting a satellite broadcast signal. DIRECTV® satellite broadcasting uses fixed network settings, i.e., Round, Oval-2, and Oval-3. The Round uses a satellite having a network ID of 0. The Oval-2 uses a satellite having a network ID of 0 and a satellite having a network ID of 3. The Oval-3 uses a satellite having a network ID of 0, a satellite having a network ID of 2, and a satellite having a network ID of 3. The network ID of 0 indicates a satellite (corresponding to Sat-A) having an orbital position of 101°. The network ID of 2 indicates a satellite (corresponding to Sat-C) having an orbital position of 110°. The network ID of 3 indicates a satellite (corresponding to Sat-B) having an orbital position of 119°.

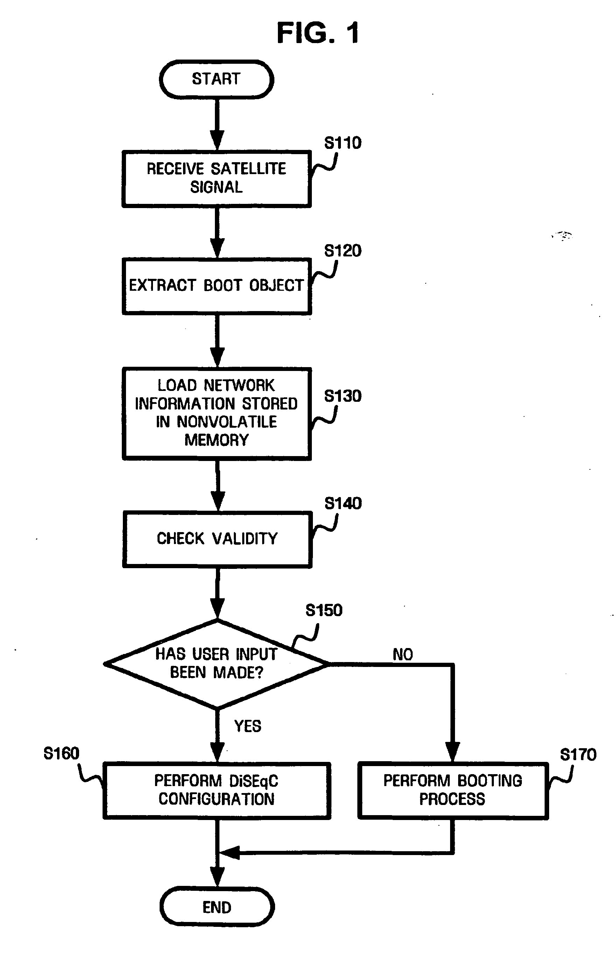

FIG. 1 is a flowchart of a booting procedure of a DIRECTV® satellite broadcast receiver.

When the power of the satellite broadcast receiver is turned on, the satellite broadcast receiver receives a satellite signal from a satellite set in default in operation S110.

After receiving the satellite signal, the satellite broadcast receiver demodulates and demultiplexes the received satellite signal and extracts a boot object in operation S120.

After extracting the boot object, the satellite broadcast receiver loads network information stored in nonvolatile memory in operation S130. The network information is information on a fixed satellite that a DIRECTV® broadcast provider has had. A user can select one among satellite settings Round, Oval-2, and Oval-3 in a DIRECTV® satellite broadcast receiver.

Next, the satellite broadcast receiver checks the validity of the network information read from the nonvolatile memory in operation S140.

Thereafter, the satellite broadcast receiver determines whether user input has been made in operation S150. When no user input has been made, the satellite broadcast receiver continues the booting procedure using fixed satellite network IDs of 0, 2, and 3, satellite transponders corresponding to the respective network IDs, and frequency information in operation S170. When user input has been made, the satellite broadcast receiver performs Digital Satellite Equipment Control (DiSEqC) configuration according to the user input in operation S160.

In such conventional booting procedure, booting or DiSEqC configuration is performed only with respect to fixed satellite information, i.e., network lDs of 0, 2, and 3. When a new satellite is added according to the change in a broadcasting environment, a satellite broadcast receiver cannot effectively obtain information on the new satellite in the conventional booting procedure. Therefore, a method of effectively obtaining information on a new satellite is desired.

Patent publication WO03/073749 A1 discloses a method for using a delivery system descriptor so that a receiver automatically can modify itself if the broadband transmission delivery parameters change. In particular, there is disclosed a method and system for identifying the delivery system and physical properties of the satellite delivery system. A delivery system descriptor is used as a descriptor and the DSID is referred to in a network information table (NIT). The DSID identifies the type of the delivery system (Satellite, Cable, Terrestrial), a band the satellite is transmitting and the position in which the satellite appears in the sky. The NIT is contained in the service information (SI). The receiver can automatically modify itself for a reception with different parameters. Also, the user can configure the receiver device for the reception with other parameters than currently applied.

Patent application EP1041821 A2 discloses a method, apparatus, and article of manufacture for sharing viewer preference information between a first user and a second user. The method comprises the steps of storing first user viewer preference information characterizing media programs selected by the first user in a memory of a first user device, and transmitting at least a portion of the second viewer preference information to a second user for storage in a memory of a second user device. The article of manufacture comprises a data storage device tangibly embodying instructions to perform these method steps. The apparatus comprises a first user device which includes at least one receiver for receiving media programs, a processor, a memory for storing viewer preference information characterizing the media programs selected by the first user, and a transmitter, for transmitting viewer preferences information to a second user device.

Embodiments of the present invention provide a method of effectively obtaining additional network information in satellite broadcasting.

According to an aspect of the present invention, there is provided a method of obtaining additional network information in digital satellite broadcasting, comprising extracting a boot object including information of each network from a digital satellite broadcast signal, determining whether each network information included in the boot object is extended network information, checking validity of the extended network information, and storing the extended network information when the extended network information is determined to be valid.

According to another aspect of the present invention, there is provided a method of obtaining additional network information in digital satellite broadcasting, the method including extracting a boot object including information of each network from a digital satellite broadcast signal, determining whether the information of each network included in the boot object is extended network information, checking validity of the extended network information, determining whether the extended network information has already been stored when the extended network information is determined to be valid, and storing the extended network information determined to be valid when it is determined that the extended network information has not been stored.

According to another aspect of the present invention, there is provided a satellite broadcast receiver, including: an extracting section for extracting a boot object including information of each network from a digital satellite broadcast signal; a central processing unit for determining whether the information of each network included in the boot object is extended network information and checking validity of the extended network information; and a storage unit for storing the extended network information when the extended network information is determined to be valid.

According to other aspects of the present invention, there are provided computer-readable storage media encoded with processing instructions for causing a processor to execute the above-described methods.

Additional and/or other aspects and advantages of the present invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a flowchart of a conventional booting procedure of a satellite broadcast receiver;
FIG. 2 is a block diagram of a satellite broadcast receiver according to an embodiment of the present invention;
FIG. 3 is a flowchart of a booting procedure of a satellite broadcast receiver according to an embodiment of the present invention; and
FIG. 4 is a flowchart of a booting procedure of a satellite broadcast receiver according to another embodiment of the present invention.

Reference will now be made in detail to embodiments of the present invention, examples of which are illustrated in the accompanying drawings, wherein like reference numerals refer to the like elements throughout. The embodiments are described below in order to explain the present invention by referring to the figures.

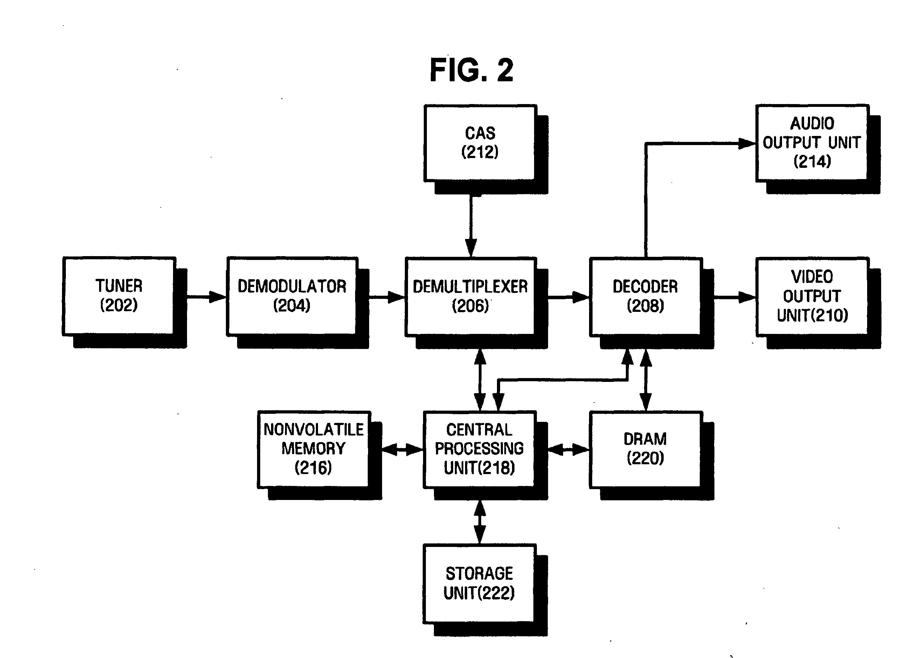

FIG. 2 is a block diagram of a satellite broadcast receiver according to an embodiment of the present invention.

The satellite broadcast receiver includes a tuner 202, a demodulator 204, a demultiplexer 206, a decoder 208, a video output unit 210, a conditional access system (CAS) 212, an audio output unit 214, a nonvolatile memory 216, a central processing unit 218, a dynamic random access memory (DRAM) 220, and a storage unit 222.

The tuner 202 selects a satellite broadcast signal of a channel having a particular frequency among satellite broadcast signals received through a satellite broadcast antenna (not shown). In digital broadcasting, a channel is used to transmit one or more programs or data.

The demodulator 204 demodulates the satellite broadcast signal selected by the tuner 202 to obtain a transport stream. For example, when the satellite broadcast signal has been modulated using quadrature phase shift keying (QPSK) modulation, the demodulator 204 can obtain a transport stream by demodulating the satellite broadcast signal using QPSK demodulation. Besides, binary phase shift keying (BPSK) and quadrature amplitude modulation (QAM) may be used for demodulation.

The demultiplexer 206 separates a video stream, an audio stream, and data from the transport stream. For example, when receiving a Moving Picture Experts Group (MPEG)-2 transport stream, the demultiplexer 206 can separate a video stream, an audio stream, and a data stream using a Packet IDentifier (PID).

The decoder 208 may include a video decoder, an audio decoder, or a data parser. The decoder 208 reconstructs video data from the video stream using video decompression such as MPEG-2 decompression or MPEG-4 decompression, reconstructs audio data using audio decompression such as MPEG Layer-3 (MP3) decompression or audio compression-3 (AC-3) decompression, and restores data by decompressing the data stream using normal data decompression. The reconstructed video data is provided to the video output unit 210. The reconstructed audio data is provided to the audio output unit 214. The restored data may be stored in the storage unit 222 in a file format or may be processed by the central processing unit 218. For example, when the restored data is caption data, the caption data is provided to the video output unit 210.

The video output unit 210 processes the reconstructed video data and provides the processed result to a display apparatus (not shown). For example, the video output unit 210 processes the reconstructed video data using an NTSC encoder. However, it is to be understood that this is just an example and the video output unit 210 may process the reconstructed video data using a PAL encoder instead.

The audio output unit 214 processes the reconstructed audio data and provides the processed result to a speaker (not shown). For example, the audio output unit 214 processes the reconstructed audio data using a digital-to-analog converter (DAC) to generate an analog audio signal.

The CAS 212 restricts reception of a particular broadcast program using encryption. To view the restricted broadcast program, a user needs to buy and insert a smart card into the satellite broadcast receiver when driving the CAS 212. When the smart card is inserted, the CAS 212 releases the particular broadcast program from the reception restriction so that the user can view the particular broadcast program.

The central processing unit 218 controls the entire system of the satellite broadcast receiver and may be implemented as a microprocessor. Although the central processing unit 218 is separately implemented in FIG. 2, it may be included within the demultiplexer 206 or the decoder 208. The central processing unit 218 can perform operations according to a user's command input through a user interface (not shown).

The nonvolatile memory 216 stores information needed for a booting procedure of the satellite broadcast receiver. For example, the nonvolatile memory 216 may store network information and a program for executing the booting procedure. The nonvolatile memory 216 may be implemented as an electrically erasable programmable read-only memory (EEPROM) or a flash memory.

The DRAM 220 temporarily stores data while the decoder 208 reconstructs video or audio data or restores normal data. In addition, the DRAM 220 temporarily stores program codes needed by the central processing unit 218 to control the entire system of the satellite broadcast receiver.

The storage unit 222 stores restored data or a video or audio stream and may be implemented as a hard disc drive.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. The functionality provided for in the components and modules may be combined into fewer components and modules or further separated into additional components and modules. In addition, the components and modules may be implemented such that they execute one or more computers in a communication system.

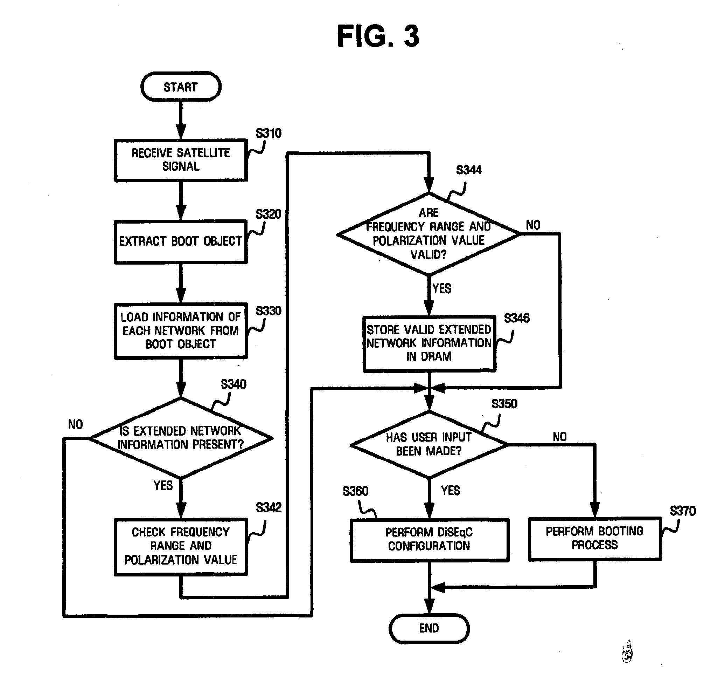

FIG. 3 is a flowchart of a booting procedure of a satellite broadcast receiver according to an embodiment of the present invention.

When the power of the satellite broadcast receiver is turned on, the satellite broadcast receiver receives a satellite signal from a satellite set in default in operation S310.

After receiving the satellite signal, the satellite broadcast receiver demodulates and demultiplexes the satellite signal to extract a boot object in operation S320.

In a DIRECTV® standard, the boot object is included in an advanced program guide (APG) and becomes a start point of the satellite broadcast receiver. The boot object is transmitted in a boot stream having a service channel ID (SCID) of 0x800 and includes guide information regarding all networks. Upon receiving the boot object, the satellite broadcast receiver can find information regarding a desired network, for example, network 0. The boot object includes information regarding a place to which guide data for each network is transmitted. This information includes a fast load stream frequency index (frequency_index), a SCID, and a network's carousel information stream SCID.

After extracting the boot object, the satellite broadcast receiver loads the information of each network from the boot object in operation S330.

Thereafter, the satellite broadcast receiver determines whether extended network information is present in operation S340. The extended network information indicates a network other than existing fixed satellites, i.e., default networks having network IDs of 0, 2, and 3.

If the extended network information is present, the satellite broadcast receiver checks a frequency range and a polarization value in operation S342. Next, the satellite broadcast receiver determines whether the extended network information has a valid frequency range and polarization value in operation S344. When it is determined that the extended network information has a valid frequency range and polarization value, the satellite broadcast receiver stores the valid extended network information in a DRAM in operation S346.

If the extended network information is not present or if the extended network information does not have a valid frequency range or polarization value, operation S346 is omitted.

Through operations S340 to S346, the satellite broadcast receiver can store information regarding a new additional network (or satellite) in the DRAM. The information stored in the DRAM can be utilized in booting (operation S370) or Digital Satellite Equipment Control (DiSEqC) configuration (operation S360).

Thereafter, the satellite broadcast receiver determines whether a user input has been made in operation S350. If no user input has been made, the satellite broadcast receiver continues the booting procedure using the stored default network information or extended network information in operation S370. However, if a user input has been made, the satellite broadcast receiver performs DiSEqC configuration according to the user input in operation S360.

Since the extended network information is stored in the DRAM, when the satellite broadcast receiver is newly booted, the stored extended network information disappears and the satellite broadcast receiver newly obtains the extended network information through operations S340 to S346. If new extended network information is received, it is also stored in the DRAM.

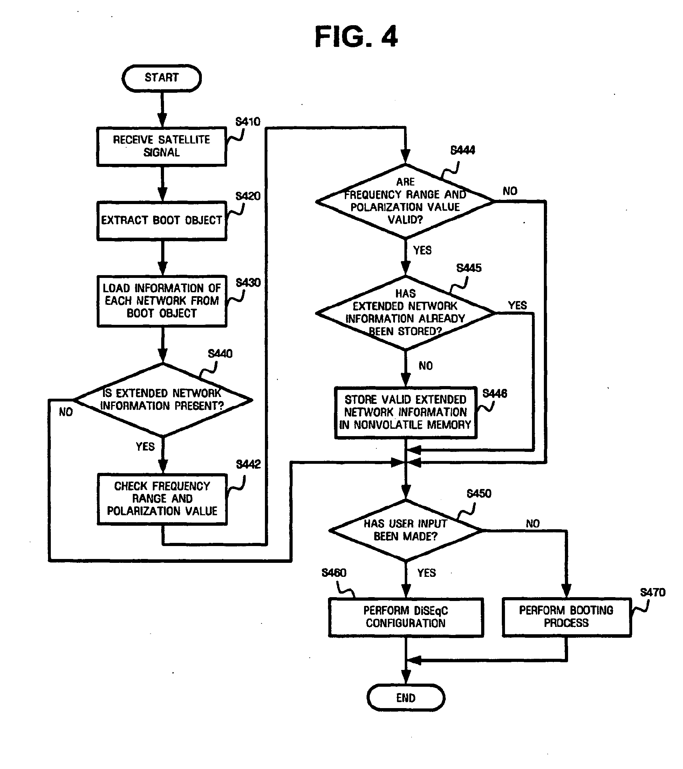

FIG. 4 is a flowchart of a booting procedure of a satellite broadcast receiver according to another embodiment of the present invention.

When the power of the satellite broadcast receiver is turned on, the satellite broadcast receiver receives a satellite signal from a satellite set in default in operation S410.

After receiving the satellite signal, the satellite broadcast receiver demodulates and demultiplexes the satellite signal to extract a boot object in operation S420.

After extracting the boot object, the satellite broadcast receiver loads the information of each network from the boot object in operation S430.

Thereafter, the satellite broadcast receiver determines whether extended network information is present in operation S440. The extended network information indicates a network other than existing fixed satellites, i.e., default networks having network IDs of 0, 2, and 3.

If the extended network information is present, the satellite broadcast receiver checks a frequency range and a polarization value in operation S442. Next, the satellite broadcast receiver determines whether the extended network information has a valid frequency range and polarization value in operation S444. When it is determined that the extended network information has a valid frequency range and polarization value, the satellite broadcast receiver determines whether the extended network information has already been stored in a nonvolatile memory in operation S445. When it is determined that the extended network information has not been stored in the nonvolatile memory, the satellite broadcast receiver stores the valid extended network information in the nonvolatile memory in operation S446.

If the extended network information is not present, if the extended network information does not have a valid frequency range or polarization value, or if the extended network information has already been stored, operation S446 is omitted.

Through operations S440 to S446, the satellite broadcast receiver can store information regarding a new additional network (or satellite) in the nonvolatile memory. The information stored in the nonvolatile memory can be utilized in booting (operation S470) or Digital Satellite Equipment Control (DiSEqC) configuration (operation S460).

Thereafter, the satellite broadcast receiver determines whether a user input has been made in operation S450. If no user input has been made, the satellite broadcast receiver continues the booting procedure using the stored default network information or extended network information in operation S470. However, if a user input has been made, the satellite broadcast receiver performs DiSEqC configuration according to the user input in operation S460.

Since the extended network information is stored in the nonvolatile memory, even when the satellite broadcast receiver is newly booted, the stored extended network information does not disappear. Accordingly, the booting procedure according to the embodiment illustrated in FIG. 4 further includes determining whether the extended network information has already been stored (operation S445) compared to the booting procedure according to the embodiment illustrate in FIG. 3.

According to the above-described embodiments of the present invention, when a new satellite is added in satellite broadcasting, a satellite broadcast receiver can obtain information regarding the new satellite so that new satellite information can be utilized in booting or DiSEqC configuration.

Although a few embodiments of the present invention have been shown and described, the present invention is not limited to the described embodiments. Instead, it would be appreciated by those skilled in the art that changes may be made to these embodiments without departing from the scope of which is defined by the claims and their equivalents.

## Claims

1. A method of obtaining additional network information in digital satellite broadcasting, comprising:
extracting (S320) a boot object including information of each network from a digital satellite broadcast signal;
determining (S340) whether the information of each network included in the boot object is extended network information;
checking (S342, S344) validity of the extended network information; and
storing (S346) the extended network information when the extended network information is determined to be valid.

2. The method of claim 1, wherein checking the validity (S342) comprises determining (S344) whether the extended network information has a valid frequency range and a valid polarization value.

3. The method of claim 1 or 2, wherein the storing (S346) comprises storing the extended network information in a nonvolatile memory (220).

4. A satellite broadcast receiver, comprising:
an extracting section for extracting a boot object including information of each network from a digital satellite broadcast signal;
a central processing unit (218) for determining whether the information of each network included in the boot object is extended network information and checking validity of the extended network information; and
a storage unit (222) for storing the extended network information when the extended network information is determined to be valid;

5. The receiver of claim 4, wherein the extraction section comprises a demodulator (204) for demodulating the satellite broadcast signal to obtain a transport stream, and a demultiplexer (206) for separating a video stream, an audio stream, and data from the transport stream.

6. The receiver of claim 4 or 5, wherein the boot object includes a fast load stream frequency index, a service channel ID (SCID), and a network's carousel information stream SCID.

7. The receiver of any of claims 4-6, wherein the extended network information indicates a network other than existing fixed satellites.

8. A computer-readable storage medium encoded with processing instructions for causing a processor to perform the method of any of claims 1-3.

## Patentansprüche

1. Verfahren zum Erhalten von Zusatznetzinformationen bei der digitalen Satellitenausstrahlung, mit den folgenden Schritten:
Extrahieren (S320) eines Boot-Objekts, das Informationen jedes Netzes enthält, aus einem digitalen Satellitenausstrahlungssignal;
Bestimmen (S340), ob die Informationen jedes Netzes, die in dem Boot-Objekt enthalten sind, Erweiterungsnetzinformationen sind;
Prüfen (S342, S344) der Validität der Erweiterungsnetzinformationen; und
Speichern (S346) der Erweiterungsnetzinformationen, wenn bestimmt wird, dass die Erweiterungsnetzinformationen gültig sind.

2. Verfahren nach Anspruch 1, wobei das Prüfen der Validität (S342) umfasst, zu bestimmen (S344), ob die Erweiterungsnetzinformationen einen gültigen Frequenzbereich und einen gültigen Polarisationswert aufweisen.

3. Verfahren nach Anspruch 1 oder 2, wobei das Speichern (S346) umfasst, die Erweiterungsnetzinformationen in einem nichtflüchtigen Speicher (220) zu speichern.

4. Satellitenausstrahlungsempfänger, umfassend:
einen Extraktionsteil zum Extrahieren eines Boot-Objekts, das Informationen jedes Netzes enthält, aus einem digitalen Satellitenausstrahlungssignal;
eine zentrale Verarbeitungseinheit (218) zum Bestimmen, ob die Informationen jedes Netzes, die in dem Boot-Objekt enthalten sind, Erweiterungsnetzinformationen sind, und zum Prüfen der Validität der Erweiterungsnetzinformationen; und
eine Speichereinheit (222) zum Speichern der Erweiterungsnetzinformationen, wenn bestimmt wird, dass die Erweiterungsnetzinformationen gültig sind.

5. Empfänger nach Anspruch 4, wobei der Extraktionsteil Folgendes umfasst: einen Demodulator (204) zum Demodulieren des Satellitenausstrahlungssignals, um einen Transportstrom zu erhalten, und einen Demultiplexer (206) zum Trennen eines Videostroms, eines Audiostroms und von Daten aus dem Transportstrom.

6. Empfänger nach Anspruch 4 oder 5, wobei das Boot-Objekt einen Schnellladestrom-Frequenzindex, eine Dienstkanal-ID (SCID) und eine Karussellinformationsstrom-SCID des Netzes enthält.

7. Empfänger nach einem der Ansprüche 4-6, wobei die Erweiterungsnetzinformationen ein von existierenden Festsatelliten verschiedenes Netz angeben.

8. Computerlesbares Speichermedium, das mit Verarbeitungsanweisungen zum Bewirken, dass ein Prozessor das Verfahren nach einem der Ansprüche 1-3 ausführt, codiert ist.

## Revendications

1. Procédé pour obtenir des informations de réseau supplémentaires dans un système de diffusion numérique par satellite, consistant à :
extraire (S320) un objet d'amorçage comprenant des informations concernant chaque réseau d'un signal de diffusion numérique par satellite ;
déterminer (S340) si les informations concernant chaque réseau contenues dans l'objet d'amorçage sont des informations de réseau étendues ;
vérifier (S342, S344) la validité des informations de réseau étendues ; et
stocker (S346) les informations de réseau étendues lorsqu'il est déterminé que les informations de réseau étendues sont valides.

2. Procédé selon la revendication 1, dans lequel la vérification de la validité (S342) consiste à déterminer (S344) si les informations de réseau étendues ont une gamme de fréquences valide et une valeur de polarisation valide.

3. Procédé selon la revendication 1 ou 2, dans lequel le stockage (S346) consiste à stocker les informations de réseau étendues dans une mémoire non volatile (220).

4. Récepteur de diffusion par satellite, comprenant :
une section d'extraction pour extraire un objet d'amorçage contenant des informations concernant chaque réseau d'un signal de diffusion numérique par satellite ;
une unité centrale de traitement (218) pour déterminer si les informations concernant chaque réseau contenues dans l'objet d'amorçage sont des informations de réseau étendues et vérifier la validité des informations de réseau étendues ; et
une unité de stockage (S222) pour stocker les informations de réseau étendues lorsqu'il est déterminé que les informations de réseau étendues sont valides.

5. Récepteur selon la revendication 4, dans lequel la section d'extraction comprend un démodulateur (204) pour démoduler le signal de diffusion par satellite afin d'obtenir un flux de transport, et un démultiplexeur (206) pour séparer un flux vidéo, un flux audio et des données du flux de transport.

6. Récepteur selon la revendication 4 ou 5, dans lequel l'objet d'amorçage comprend un indice de fréquence de flux de chargement rapide, un ID de canal de service (SCID), et un SCID de flux d'informations de carrousel.

7. Récepteur selon l'une quelconque des revendications 4 à 6, dans lequel les informations de réseau étendues indiquent un réseau autre que des satellites fixes existants.

8. Support de stockage lisible par ordinateur sur lequel sont codées de instructions de traitement destinées à faire en sorte qu'un processeur mette en oeuvre le procédé de l'une quelconque des revendications 1 à 3.
